(19)

Europäisches
Patentamt
European
Patent Office
Office européen
des brevets

(11)  **EP 2 889 804 A1**

(12)  **EUROPEAN PATENT APPLICATION**

(43) Date of publication:
01.07.2015   Bulletin 2015/27

(51) Int Cl.:
*G06K 9/00* *(2006.01)*     *G10L 15/25* *(2013.01)*

(21) Application number: **13290332.9**

(22) Date of filing: **30.12.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Fuchs, Rolf**<br>**70435 Stuttgart (DE)**<br><br>(74) Representative: **DREISS Patentanwälte PartG mbB**<br>**Postfach 10 37 62**<br>**70032 Stuttgart (DE)** |
| (71) Applicant: **ALCATEL LUCENT**<br>**92100 Boulogne-Billancourt (FR)** | |

(54)  **Systems and methods for contactless speech recognition**

(57)     Systems and methods for contactless speech recognition using lip-reading are provided. In various aspects, a speech recognition unit 112 is configured to receive, via a receiver 108, a Doppler broadened reflected electromagnetic signal that has been modulated and reflected by the lip and facial movements of a speaking subject 104 and to output recognized speech based on an analysis of the received reflected signal. In one embodiment, the functionality of speech recognition unit 112 is implemented via a preprocessing unit 202, a Neural Network ("NNet") unit 204, and a Hidden Markov Model ("HMM") unit 206.

EP 2 889 804 A1

**Description**

**TECHNICAL FIELD**

The present disclosure is directed towards speech processing systems. More particularly, it is directed towards systems and methods for speech recognition in different languages.

**BACKGROUND**

This section introduces aspects that may be helpful in facilitating a better understanding of the systems and methods disclosed herein. Accordingly, the statements of this section are to be read in this light and are not to be understood or interpreted as admissions about what is or is not in the prior art.

Automated speech recognition systems are utilized for a wide variety of applications. For example, automatic speech recognition systems are utilized in various interactive systems such as travel systems, telecommunication systems, consumer systems (e.g., consumer devices), security systems, accessibility systems, multimedia systems, etc.

The performance of speech recognition systems can be evaluated in terms of accuracy and speed. Accuracy is typically based on a word error rate ("WER"), whereas speed is typically measured with a real time factor. Other measures of accuracy include Single Word Error Rate ("SWER") and Command Success Rate ("CSR").

Speech recognition systems operate under a variety of complex parameters that affect the measured performance of the system. For example, vocalizations may vary in terms of accent, pronunciation, articulation, roughness, nasality, pitch, volume, or speed. In addition, speech may be distorted due to external factors such as ambient noise, echoes, or electrical responses.

**BRIEF SUMMARY**

Systems and methods for contactless speech recognition processing using electromagnetic wave signals are provided. While the disclosure is particularly applicable to speech recognition systems and is described with specific reference thereto, it will be appreciated that the principals of the disclosure may be applied in other signal processing systems and applications, such as language recognition systems, biometric systems (e.g., voice recognition systems), handwriting recognition systems, etc.

A number of factors may affect the measured accuracy of a speech recognition system. One such factor includes the vocabulary size and confusability of a language. For example, the letters of the English alphabet are difficult to discriminate because they include a number of confusable characters, such as the E-set {B, C, D, E, G, P, T, V, and Z}.

Accuracy can also be affected based on whether the speech recognition system is configured as a single speaker recognition system or a multi-speaker recognition system, and whether the spoken words are isolated or discontinuous, as opposed to flowing or continuous. Language constraints, such as grammar or syntax, can also affect accuracy. Yet further, accuracy can also be affected based on whether the context of the speech is known (e.g., text based) or unknown (e.g., spontaneous). Yet other factors that can affect the accuracy of a speech recognition system include environmental conditions such as ambient or background noise, acoustical distortions (e.g., echoes), etc.

The systems and methods disclosed may be applied for speech recognition in a variety of different languages. In addition, the systems and methods disclosed herein may be integrated with or support microphone based speech recognition systems. Furthermore, the systems and method disclosed herein may be applicable for individuals with speech or hearing impairments.

In various aspects, systems and/or methods for contactless speech recognition based on lip-reading is provided. In one aspect, a system and/or method includes receiving a reflected electromagnetic signal that has been modulated by the lip and facial movements of a speaking subject and preprocessing the reflected electromagnetic signal to determine a set of principal components. The determined set of principal components is classified into a classified set of phonemes in a language. The classified set of phonemes of the language is processed into a concatenated sequence representing a recognized word (or sentences) of the language.

In one aspect, the reflected electromagnetic signal is a millimeter radar signal having a carrier frequency of greater than or equal to 5 GHz.

In one aspect, the reflected electromagnetic signal is a pulsed electromagnetic signal having a pulse frequency of about 8 KHz.

In one aspect, the determined set of principal components is classified into the classified set of phonemes in the language using a neural network implemented using a plurality of levels, and where each of the levels includes a plurality of nodes, and each of the nodes of a given level is interconnected to each of the nodes of another level by a different synaptic connection.

In one aspect, the classification of the set of the principal components into the classified set of the phonemes in the language includes adjusting a weight associated with one or more of the different synaptic connections of a neural network.

In one aspect, the plurality of levels of a neural network include a input level having a number of nodes that correspond to a number of principal components in the set of principal components, and a output level having a number of nodes that correspond to a number of phonemes in the language. In at least one aspect, the plurality of levels also includes at least one hidden level of a neural network.

In one aspect, the reflected electromagnetic signal is demodulated into a windowed time-spectrum signal by removing a carrier of an un-modulated emitted electromagnetic signal from the reflected electromagnetic signal.

In one aspect, a frequency transform is determined for the windowed time-spectrum signal, and a power spectrum is determined of the frequency transform of the windowed time-spectrum signal. A set of cepstral coefficients are determined for the windowed time-spectrum signal by computing an inverse frequency transform of the power spectrum, and, the set of principal components are determined from the determined set of cepstral coefficients.

In one aspect, the set of principal components are determined from the determined set of cepstral coefficients based on the order of highest variance of the cepstral coefficients.

In one aspect, the number of principal components that are determined in the set of principal components is smaller than the number of cepstral components in the determined set of cepstral coefficients.

In one aspect, the set of principal components are determined from the determined set of cepstral coefficients by computing a discrete Karhunen-Loève transform, a Hotelling transform, or a proper orthogonal decomposition transform.

In one aspect, the system and/or method is dynamically configured for classifying the set of principal components based on different languages, dialects, or changes in the prevalent external conditions by applying different ones of a plurality of selectable parameter sets.

In one aspect, a system and/or method includes receiving the set of the principal components for classification of the set of the principal components into a respective classified set of phonemes of at least one additional language, and, receiving the respective classified set of phonemes of the at least one additional language and processing the respective classified set of phonemes in the at least one additional language into at least one additional concatenated sequence representing a recognized word of the at least one additional language.

In various aspects, a lip-reading speech recognition system and/or method in accordance with the present disclosure is implemented in at least one of a television, a PC monitor, a multimedia tablet, a set-top box, a projector, a conferencing device, a smart phone, a security device, a server, or a personal computer.

## BRIEF DESCRIPTION OF THE DRAWINGS

FIG. 1 illustrates an example of a contactless lip-reading speech recognition system in accordance with an aspect of the disclosure.

FIG. 2 illustrates an example embodiment of a speech recognition unit of the speech recognition system of FIG. 1 in accordance with an aspect of the disclosure.

FIG. 3 illustrates an example embodiment of a neural network unit of the speech recognition unit illustrated in FIG. 2.

FIG. 4 illustrates an example embodiment of a multi-language speech recognition unit in accordance with one aspect of the disclosure.

FIG. 5 illustrates another example embodiment of a multi-language speech recognition unit in accordance with one aspect of the disclosure.

FIG. 6 illustrates an example process for contactless lip-reading speech recognition in accordance with an aspect of the disclosure.

FIG. 7 illustrates an example of determining an antenna configuration in accordance with an aspect of the disclosure.

FIG. 8 illustrates a block-diagram example of an apparatus for implementing various aspects of the disclosure.

## DETAILED DESCRIPTION

Various aspects of the disclosure are described below with reference to the accompanying drawings in which some example embodiments are shown. Like numbers refer to like elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The present disclosure describes systems and methods for speech recognition based on contactless lip-reading. In one embodiment, a system includes a transmitter for emitting an inquiry electromagnetic signal towards a speaking subject, which in one aspect is a millimeter radar signal. The system further includes a receiver for receiving a Doppler broadened reflected electromagnetic signal that is a version of the emitted electromagnetic signal (e.g., emitted millimeter radar signal having a frequency equal to or greater than 5 GHz) that has been modulated and reflected by the moving lips or the changing facial features of the speaking subject. In one aspect, the system is configured to recognize speech articulated by the speaking subject based on an analysis of the Doppler broadened reflected electromagnetic signal that has been modulated by the lip and facial movements of the speaking subject as described further below.

In various aspects, the present disclosure describes one or more trained neural networks for classifying detected and preprocessed sounds into set of phonemes. As disclosed further below, the one or more neural networks, in conjunction with one or more Hidden Markov Models, are used to support and enable speech recognition in different languages or environmental or external conditions.

The use of neural networks makes few, if any, assumptions about feature statistical properties and allows discriminative training of in recognizing speech. Modern general-purpose speech recognition systems are based on Hidden Markov Models. Hidden Markov Models are statistical models that output a sequence of symbols or quantities. Hidden Markov Models are used in speech recognition because a speech signal can be viewed as a piecewise stationary signal or a short-time stationary signal. In a short time-scales (for example, 10 milliseconds), speech can be approximated as a stationary process. Speech can be thought of as a Markov model for many stochastic purposes.

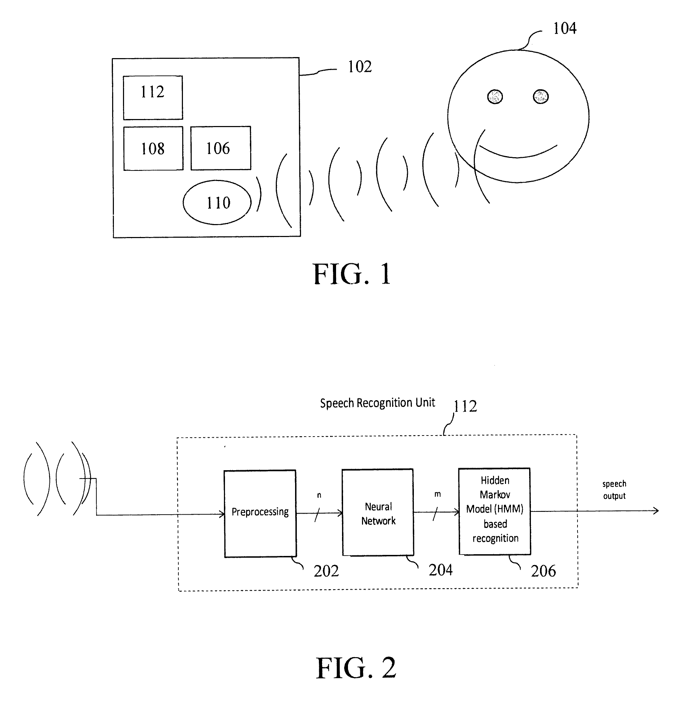

FIG. 1 illustrates one embodiment of a contactless lip-reading system 102 for performing speech recognition of speech articulated or spoken by a subject 104. The system 102 may be implemented in various devices, such as, for example, a television, PC monitor or other display, a multimedia tablet, a set-top box, a projector, a conferencing device, a smart phone, a security camera or device, a server or personal computer, or any other type computing device or combination of computing devices.

In the embodiment disclosed in FIG. 1, system 102 includes a transmitter 106 for emitting an electromagnetic signal towards the subject 104, which emitted signal in one aspect includes pulses of a millimeter radar signal, and a receiver 108 for receiving a Doppler broadened reflected electromagnetic signal, which reflected signal in one aspect is a version of the emitted millimeter radar signal that has been modulated based on the lip or facial movements of the subject as he/she speaks. The transmitter 106 and receiver 108 may be configured to respectively transmit and receive the electromagnetic signals (e.g., millimeter radar signals) via an antenna 110, which in various aspects may be implemented as one or more directional antennas, omnidirectional antennas, or a beam-forming array of antennas.

It has been found that while the frequency shift of the reflected electromagnetic signal caused by the Doppler effect is characteristic for the radial velocity of the moving lips and the changing external facial features of the speaking subject, the spectral broadening of the reflected signal is characteristic of internal mouth movements and vibrations caused by articulation of particular words or sounds. With an appropriate selection of the frequency of the emitted signal, an acoustic sound signal representing the speech articulated by the speaking subject may be determined as a difference between the emitted signal(s) and the Doppler broadened reflected signal(s).

In addition to the transmitter 106, the receiver 108, and the antenna or antennas 110, the system 102 of FIG. 1 includes a speech recognition unit 112. The speech recognition unit 112 is configured to receive, via the receiver 108, the Doppler broadened reflected signal that has been modulated and reflected by the lip and facial movements of the speaking subject 104, and to output recognized speech based on an analysis of the received reflected signal as described in detail below. As shown in FIG. 2, in one embodiment the functionality of speech recognition unit 112 is implemented via a preprocessing unit 202, a Neural Network ("NNet") unit 204, and a Hidden Markov Model ("HMM") unit 206. Although indicated as separate units, it will be understood that in other aspects, the functionality described below with respect to the any combination of the preprocessing unit 202, the Neural Network ("NNet") unit 204, and the Hidden Markov Model ("HMM") unit 206 may be integrated into a single unit or distributed into other units.

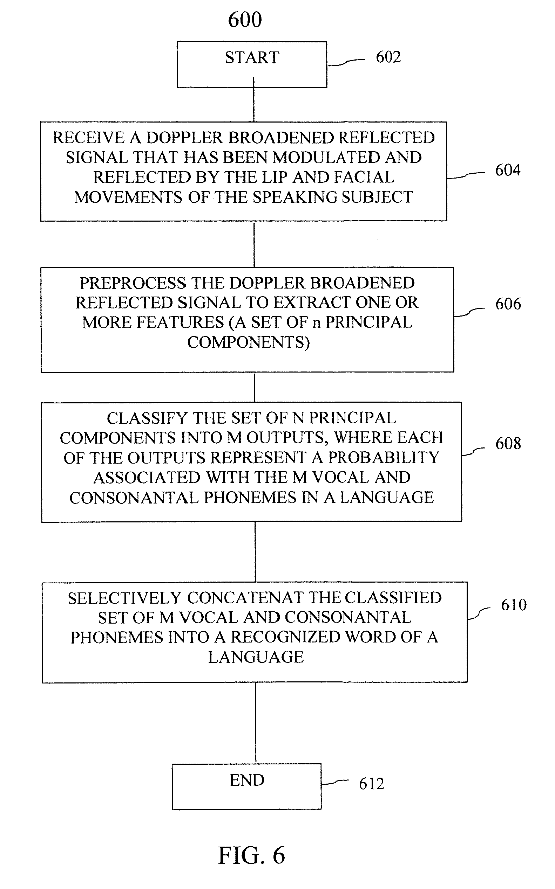

The operation of the speech recognition unit 112 is discussed in conjunction with the process 600 illustrated in FIG. 6. The Doppler broadened reflected signal that has been modulated and reflected by the lip and facial movements of the speaking subject 104 is received at the preprocessing unit 202 (step 604 of FIG. 6). The Doppler broadened reflected signal is preprocessed (step 606 of FIG. 6) to extract one or more features (a set of principal components) by the preprocessing unit 202. In order to extract the one or more features, in one aspect the reflected signal is first demodulated into a windowed time-spectrum signal to remove the unmodulated carrier frequency of the emitted signal. A frequency spectrum for the windowed time-spectrum signal is determined by performing a Fourier transform (e.g., by computing a Fast Fourier Transform ("FFT")) on the windowed time-spectrum signal, and a power spectrum for the windowed time-spectrum signal is determined from the frequency spectrum of the windowed time-spectrum signal. The cepstral coefficients for the windowed time-spectrum signal are determined by performing an inverse Fourier transform (e.g., by computing a Inverse Fast Fourier Transform ("IFFT")) on the power spectrum signal of the windowed time-spectrum signal to obtain a power cepstrum for the windowed time-spectrum signal, and a reduced set of n principal components are determined from the cepstral coefficients as the one or more features that are extracted.

More particularly, the preprocessing unit 202 initiates the extraction of the one or more features or principal components by subtracting the un-modulated emitted signal from the modulated reflected signal to remove the carrier signal and to obtain a modulated time-spectrum signal. The resulting modulated time-spectrum signal has a pulse period that corresponds to the pulse rate of the emitted signal. For each pulse period, the time spectrum signal is divided into a number (e.g., one or more) of time windows to obtain the windowed time-spectrum signal, where the number of time windows that is selected may be representative of the predetermined average distance as a function of the running time. More particularly, the number of time windows may correspond to the distance resolution between the system 102 and the speaking subject 104 and depends on the pulse duration of the emitted signal in a given period of time.

A sequence of values for the time-spectrum signal is formed for each time window, and the determined sequences of values corresponding to the respective time windows are received in respective pulse periods as the sampled values for the pulse periods. The sequence of values for the time windows forming the windowed time-spectrum signal represent a acoustic sound signal (referenced herein as the Doppler sound signal) for the sounds that are vocalized by the subject 104 and have been sampled with the pulse frequency of the emitted radar signal. As will be understood based on the foregoing, the number of sampled values of the Doppler sound signal depends on the selected period of time, and the frequency range of the Doppler sound signal will be proportional to the frequency of the un-modulated emitted signal. In one aspect, a suitable frequency range is around 0 to 2 kHz for voice or speech recognition, though other frequency ranges may also be selected.

The sequences of values of the Doppler sound signal are mapped into the frequency domain by performing a discrete Fourier transformation (e.g., by computing a FFT) on the windowed time-spectrum signal. Since the resulting frequency spectrum will be symmetrical, only half of coefficients of the frequency transform may be processed while the other half may be discarded. A power spectrum is determined based on the frequency transform, and a power cepstrum is obtained by performing an inverse Fourier transformation on the power spectrum.

As will be appreciated, a power cepstrum may be generally understood as the result of taking the Inverse Fourier transform (IFT) of the logarithm of the estimated power spectrum of a signal (in this case, the windowed time-spectrum signal). It has been found that preprocessing the Doppler reflected signal into a power cepstrum is advantageous because it enables reliable phonemes classification by the NNet unit 204 of the one or more features extracted from the set of cepstral coefficients obtained from the power cepstrum.

The preprocessing unit 202 is configured to determine the set of cepstral coefficients from the power cepstrum for the windowed time-spectrum signal as described above and to thereupon compute a set of principal components from the set of cepstral coefficients, where the number of principal components may be smaller than the number of the cepstral components. More particularly, preprocessing unit 202 is configured to transform the cepstral coefficients into a smaller set of values of linearly uncorrelated variables which are determined as the set of (e.g., n) principal components. This transformation is computed such that the first principal component of the set of principal components has the largest possible variance (that is, accounts for as much of the variability in the cepstral components as possible), and each succeeding principal component in the set of n principal components then has the highest variance possible under the constraint that it be orthogonal to (i.e., uncorrelated with) the preceding principal components.

In other words, the set of the principal components is computed in the order of the highest variance of the cepstral components, and those principal components having an insignificant (e.g., lower than a predetermined threshold) of variance may be disregarded to reduce the number of the principal components to a desired number n of principal components. An important objective of computing the principal components is to reduce the complexity of the windowed time-spectrum signal to, for example, a smaller set of values to reveal the hidden, simplified structures that often underlie it. The preprocessing unit 202 may be configured to transform the set of cepstral components into a reduced set of principal components using a variety of transforms, such as, for example, the discrete Karhunen-Loève transform ("KLT"), the Hotelling transform or proper orthogonal decomposition ("POD").

The set of, for example, n number of principal components that are output or produced by the preprocessing unit 202 are used as n inputs into the NNet unit 204. The set of n principal components are classified into m outputs (step 608 of FIG. 6) by the NNet unit 204, where each of the outputs represent a probability associated with the m vocal and consonantal phonemes in a language. The number m of vocal and consonant phonemes that are classified by the NNet unit 204 may vary with the language. For example, in the German language there are around 40 (vocal and consonantal) phonemes. In order to support speech recognition in multiple different languages, the speech recognition unit 112 may be configured with a set of multiple NNet units, where each NNet unit 204 in the set of multiple NNets may be configured to classify the set of principal components into a classified set of m vocal and consonantal phonemes of a different language as described further below. The classified phonemes that are output by the NNet unit 204 are used as the input for the HMM 206.

The classified set of m vocal and consonantal phonemes are selectively concatenated into a recognized word of a language (step 610 of FIG. 6) by the HMM unit 206. The HMM unit 206 may be configured in a conventional manner for enabling representation of the classified set m of phonemes into words and for generating sentences based on the words. It is known that a HMM may include HMM model parameters, e.g., mixture components which are characterized by Gaussian distributions. Thus, for example, each of the m phonemes may be characterized by the HMM unit 206 using a distinct HMM, and the HMM unit 206 may be configured to identify a sequence (e.g., a set of HMM models from the multiple HMMs) which best matches, based on a maximum likelihood, respective concatenation of the classified phonemes corresponding into a recognized word of a language. The performance of the HMM unit may be improved or adjusted by training the HMM unit 206 for characterizing the implemented HMMs of the m phonemes using, for example, Bayesian adaptation approach and/or the transformation based approach. The words of a language are recognized may be output to a speaker associated with the lip-reading system 102, or converted to text and output to a display associated with the lip-reading system 102, or stored in a memory associated with the lip-reading system 102.

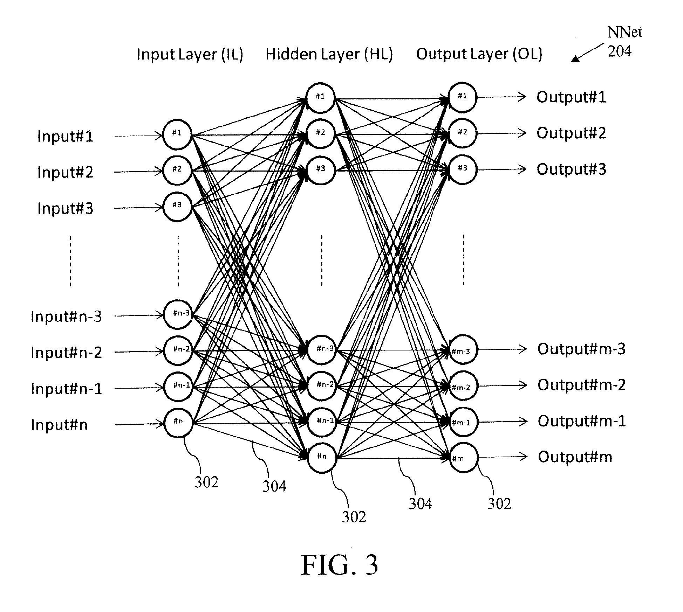

As shown in FIG. 3, the NNet unit 204 may be implemented as nodes 302 and synaptic connections 304 between the nodes 302. In one aspect, weights which are determined by training with training data for a given language or external conditions are allocated to the synaptic connections 304, where each of the nodes 302 output an activity as the result of input data of the set of n principal components into the nodes.

In one embodiment, the NNet unit 204 is subdivided into different hierarchical layers or levels (e.g., as a multilayer perceptron) which are designated in FIG. 3 as the input layer, hidden layer, and the output layer (sometimes also referenced herein respectively as the input level, hidden level, and the output level). As seen in FIG. 3, each of the nodes of a subsequent (e.g., lower) layer are connected to each of the nodes of the preceding (e.g., higher) layer via synaptic connections. The input data for the nodes 302 in a lower layer (e.g., the hidden layer or the output layer, respectively) may be understood as the activity or output of the nodes of the preceding higher layer (e.g., the input layer or the hidden layer, respectively) multiplied by the weight of the respective synaptic connections 302 interconnecting the nodes of the respective layers. The activation or output of a given node $N_n$ based on its input may be given as:

$$Y_n = f\left(\sum_i w_{in} x_i\right)$$

where, in the equation above, $Y_n$ is the output of the $n^{th}$ node $N_n$, $f(\cdot)$ is a predetermined function, such as, for example, the hyperbolic tangent function, $x_i$ is the activation of the $i^{th}$ node $N_i$ and $w_{in}$ is the weight of the synaptic connection between the $i^{th}$ node $N_i$ and the $n^{th}$ node $N_n$.

A given language will typically use only a small subset of the many possible sounds that the human speech organs can produce, and (because of allophony) the number of distinct vocal and consonant phonemes will generally be smaller than the number of identifiably different sounds. Different languages vary considerably in the number of vowels and consonant phonemes (although apparent variation may sometimes result from the different approaches taken by the linguists doing the analysis). For example, the total vowel and consonant phonemic inventory varies from as few as 11 as in the Rotokas language and the Pirahã language to as many as 141 in the !Xũ language.

To provide some further examples, some languages have a very low number of phonemically distinct vowels, such as in the Ubyx and the Arrernte languages which have only 2 distinct vowels. In contrast, the Bantu language Ngwe has as many as 14 vowels, 12 of which may occur long or short, making 26 oral vowels, plus 6 nasalized vowels, long and short, making a total of 38 vowels, while the !Xóõ language achieves 31 pure vowels, not counting its additional variation by vowel length, by varying the phonation.

As with the number of vowels, the number of consonant phonemes also varies by languages. For example, the Puinave language has just seven consonant phonemes, while the Rotokas language has only six consonant phonemes. The !Xóõ language, on the other hand, has somewhere around 77 consonant phonemes, while the Ubyx language has as many as 81 consonant phonemes.

The much more prevalent English language uses a rather large set of 13 to 21 vowel phonemes, including diphthongs, although its 22 to 26 consonants are close to the average. In turn, the German language has approximately 40 distinct phonemes (approximately 20 vocal phonemes and approximately 20 consonantal phonemes). German dialects often have more phonemes, and some languages, such as French, have no phonemic tone or stress, while several of the Kam-Sui languages have nine tones, and Wobe, one of the Kru languages, may have 14.

The most common vowel system consists of the five vowels /i/, /e/, /a/, /o/, /u/. The most common consonants are /p/, /t/, /k/, /m/, /n/. Relatively few languages lack any of these, although it does happen: for example, Arabic lacks /p/, standard Hawaiian lacks /t/, Mohawk and Tlingit lack /p/ and /m/, Hupa lacks both /p/ and a simple /k/, colloquial Samoan lacks /t/ and /n/, while Rotokas and Quileute lack /m/ and /n/.

Returning to the embodiment illustrated in FIG. 3, the classification result of the NNet unit 204 is determined by the activation of the m nodes in the last layer (the output layer), where m is the number of classifiable vocal and consonant phonemes that are selected in view of the desired language or languages as described above. The greatest probability classification is that a dedicated phoneme belongs to the class whose output node exhibits the highest activation, as illustrated in the table below.

| Output Layer (OL) classification | (vocal and consonantal) phoneme |
|---|---|
| Output#1 | 1 |
| Output#2 | 2 |
| Output#3 | 3 |
| . | . |
| . | . |
| Output#m-2 | m-2 |
| Output#m-1 | m-1 |
| Output#m | m |

In the embodiment illustrated in FIG. 3, all nodes of a given layer have synaptic connections with all nodes of another next layer. The input layer has n nodes (#1 to #n) and each of them has a respective input (Input#1 to Input#n), which correspond to each of the set of n principal components received by the NNet unit 204 from the preprocessing unit 202. In turn, each of the n nodes of the input layer has a synaptic connection with each of the n nodes of the hidden layer.

While only a single hidden layer is illustrated in FIG. 3, in other aspects the NNet unit 204 may include more than one hidden layer. While additional hidden layers may improve the accuracy of the classification of the principal components into a language's phonemes, it is also likely to increase the computing time and cost of the NNet 204. A NNet unit with the three layers as shown in FIG. 3 may provide a suitable balance between accuracy and cost, and it will be understood that for some languages or in cases where a greater accuracy is desired, additional hidden layers may be included in the NNet unit 204.

The number of nodes n depicted in the input layer and the hidden layer of FIG. 3 depend on the information value of the n principal components provided by the preprocessing unit 202 to the NNet unit 204. The preprocessing transformation of the set of correlated cepstral coefficients into a reduced and refined set of n values of linearly uncorrelated principal components by the preprocessing unit 202 may significantly enhance the classification result of the NNet 204 for a given n number of nodes in the input and the hidden layers.

A suitable balance may be achieved where the number n of the nodes in the input layer and the hidden layer (and the number of principal components) is around 25-35, though in other aspects fewer or greater number of nodes (and principal components) may also be selected for languages that have a relatively smaller or larger number of classifiable phonemes. In addition, and as noted previously, additional benefits in the accuracy of the classification may also be realized by adding more layers to the NNet 204, though this is likely to also impact the balance of the performance versus cost in terms of the time and resources necessary for computations.

A classification through the NNet unit 204 may take place in that classification results stored in the past are used to make conclusions about future ones by assigning appropriate weights to the synaptic connections 304 between respective nodes 302 of the NNet 204. To that end, in one aspect the NNet unit 204 may be configured to learn classifications for a given language using training data from sets of different outputs. In this case, training data for classifying the principal components received from the preprocessing unit 202 into the phonemes of a given language may be presented to the NNet unit 204, until a desired accuracy is reached in the output of the NNet unit 204 for allocating the training data correctly by varying the weights of the synaptic connections 304. Further towards this end, the training data used to assign or to adjust the weights to the synaptic connections 304 for a given language may comprise preprocessed principal components as described above. A variety of training algorithms may be used for assigning or adjusting the weights to the synaptic connections 304 for training the classification output of the NNet 204, such as, for example, an error back propagation algorithm or the cascade correlated network algorithm.

In one aspect, the NNet 204 may be self-trained by providing training data based on a wide range of preprocessed Doppler broadened reflected signals, until the NNet 204 is configured to allocate or classify the resulting preprocessed principal components into the proper phoneme classifications.

The weights of the synaptic connections 304 that are determined through training may be determined, stored, and applied to the NNet unit 204 in order to reproduce a given topology of a NNet unit 204 in different implementations of the speech processing system 102 (e.g., in different NNet units in other devices or applications), thus eliminating the potential need to train every individual device or implementation of the speech system 102 in a given situation. However, since it may not always be always to train a single NNet 204 with training data suitable for all possible situations in which the system 102 may be used, in one important aspect different versions of the NNet unit 204 may provided, e.g., a particular version of a trained NNet unit 204 in a given implementation may be updated or replaced with another version of the NNet unit 204, that has been specifically trained for particular prevalent situations (e.g., environment, subject, distance, or language) or for particular implementations (e.g., different devices) that are most applicable or appropriate in a given situation or implementation.

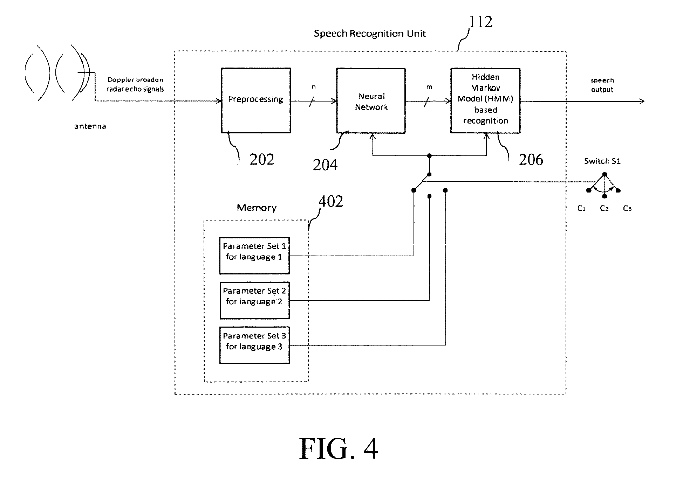

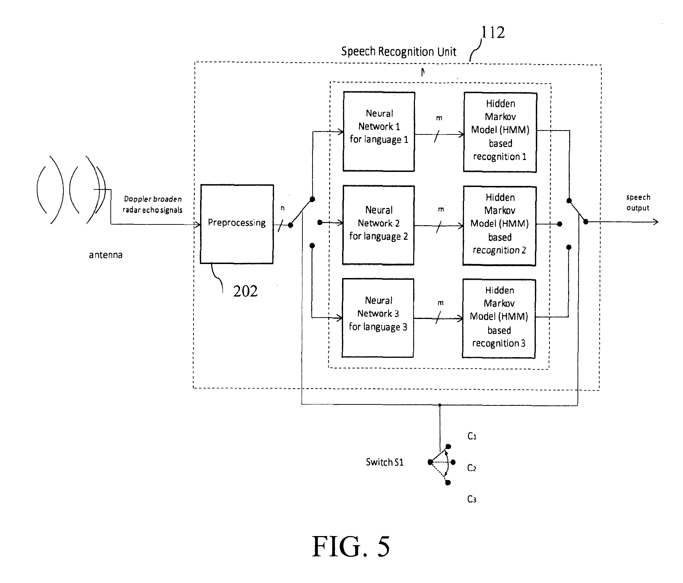

The speech recognition unit 112 can be advantageously implemented in different ways in order to support different situations/conditions or languages. For example, in one implementation, the speech recognition unit 112 may be implemented by storing a plurality of parameter sets for configuring a given NNet unit 204 and a given HMM unit 206 for different languages or conditions as shown in the example of FIG. 4. In another embodiment, the speech recognition unit 112 may be implemented with a plural set of NNets 204 and corresponding HMM units 206 for supporting a respective plurality of languages or environmental conditions as shown in the example of FIG. 5.

FIG. 4 illustrates one possible implementation of the speech recognition unit 112. In this embodiment, the speech recognition unit 112 includes a memory 402 which stores a plurality of parameter sets (designated as Parameter Set 1, 2, and 3). Each parameter set (e.g., Parameter Set 1, 2, or 3) may include predetermined training data for configuring the NNet unit 204 to support a different language, a different situation/condition, or a combination thereof. In the embodiment illustrated in FIG. 4, the three different parameter sets are selectively applied (e.g., via the switch S1) to configure the NNet 204 and the HMM 206 with appropriate training data for three different languages or application/conditions. Thus, the embodiment shown in FIG. 4 may be used to selectively configure the speech recognition unit 112 to perform speech recognition for three different languages, to configure the speech recognition unit 112 for three different dialects of a single language, or to improve accuracy based on different external situations/conditions (e.g., environmental or ambient conditions), or for other combinations thereof. It will also be understood that the disclosure is not limited to the example of FIG. 4, and that in other embodiments there may be fewer or greater number of parameter sets for additional languages or conditions. In addition, the selection or switching between one parameter set to another parameter set may be manual based on user (e.g., operator or subject) input, or automatic based on detected conditions.

FIG. 5 illustrates another possible implementation of the speech recognition unit 112. Instead of storing different parameter sets as in the example of FIG. 4, FIG. 5 illustrates an implementation of the speech recognition unit 112 in which three different topologies of NNets units and corresponding HMM units have been implemented. Such implementation may be advantageous where the NNet units are trained using a cascade-correlated networks type algorithm, where the nodes and the synaptic connections are arranged during training in a particular configuration for achieving a desired classification result.

As in the embodiment shown in FIG. 4, the embodiment shown in FIG. 5 may also be used to selectively configure the speech recognition unit 112 to perform speech recognition for three different languages, to configure the speech recognition unit 112 for three different dialects of a single language, or for any such combinations. In this case, instead of selectively applying a different parameter set, a different corresponding set of NNet unit and HMM unit may be selected via the switch S1 based on the desired language, dialect, external conditions, etc.

As before, it will be understood that the disclosure is not limited to the example of FIG. 5, and there may be fewer or greater number of corresponding sets of NNet units and HMM units in different embodiments for additional languages, dialects, conditions or combinations thereof. In addition, the selection or switching between one corresponding set of NNet unit and HMM unit to another corresponding set may be manual based on user (e.g., operator or subject) input, or automatic based on detected conditions.

In one embodiment, the transmitter 106 of FIG. 1 transmits or emits signals via the antenna 110 as sequence of short radar signals having a pulse rate of about 8 kHz, though in other embodiments the suitable pulse rate may vary, based on, for example, the expected conditions governing the use of the system 102 and its environment. The frequency of the signals that are transmitted in the pulses may be in a range of 5 GHz ($\lambda \approx 0,06$mm) or greater, though, as noted earlier, in some embodiments and environments a different frequency may also be chosen. In one particular embodiment, the pulse rate and the frequency may be dynamically varied based on the accuracy of the classification. For example, the pulse rate may dynamically vary based on the rate at which the subject speaks or based on the language associated with the subject in order to adjust the estimated accuracy of the speech recognition unit 112 to an acceptable predetermined level.

The construction and placement of the antenna 110 may be determined to accommodate a desired angle of beam spread, such that system 102 is suitably configured to receive and detect reflection of the emitted signal that has been modulated by the lips and the facial features of the subject 104 in a predetermined range or distance between the antenna 110 and the subject 104. The desired angle of beam spread may vary, for example, based on whether the antenna 110 is expected to be in close proximity to the subject or farther from the subject. In general, a higher angle of beam spread may be desirable where system 102 and the antenna 110 are implemented in a cell phone or other handheld device that is fairly proximate to the subject 104. Alternatively, where the antenna 110 is expected to be further away from the subject 104, such as where system 102 and the antenna 110 are incorporated into a television or other display or device farther away from the subject, a lower angle of beam spread may be selected due to the greater distance between the antenna 102 and the subject 104.

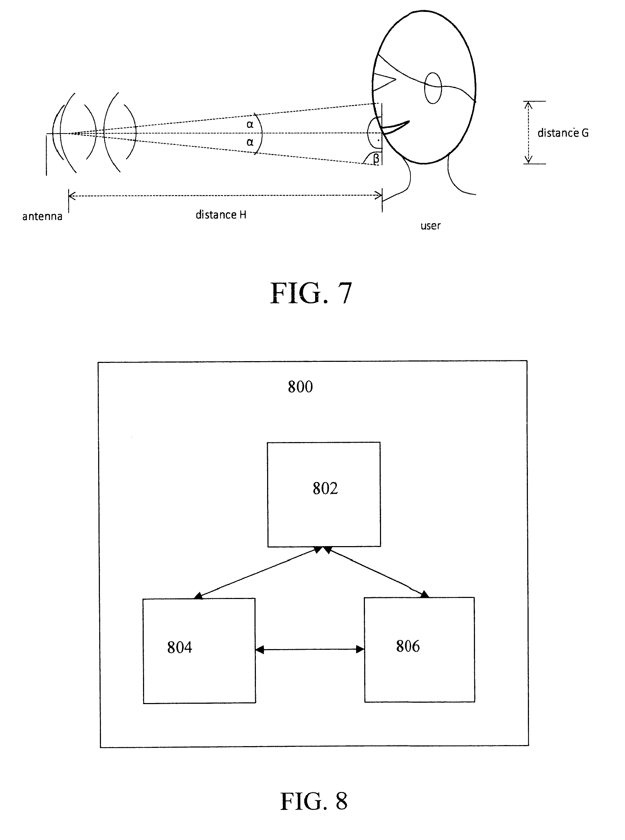

FIG. 7 illustrates an example of a spatial arrangement of the antenna 110 to the subject 104 for speech recognition by lip-reading. It is assumed in this example that the transmitter 106 emits a millimeter-wave radar signal having a pulse rate of 8 KHz and a frequency of about 5 GHz via the antenna 110, though this is not a limitation. In addition, while a particular spatial arrangement is shown in FIG. 7, other arrangements are possible and will be apparent based on the discussion herein. The angle of radiation or spread by the antenna 110 to the subject 104 may be estimated as shown in FIG. 7 for different applications using:

$$\tan \propto = \frac{G}{2}H$$

where $\propto$ is the estimated desired angle of radiation, G is the expected height distance, and $H$ is the expected distance between the antenna 110 and the subject 104.

For example, in the embodiment where the transmitter 106 emits a millimeter-wave radar signal having a pulse rate of 8 KHz and a frequency of about 5 GHz via the antenna 110, a suitable angle of radiation for the antenna 110 is approximately 15 degrees where the distance between the antenna 110 and subject 104 is about .5 meters which may be typical for a subject placed in front of a PC monitor implementing system 102, or about 45 degrees where the system 102 and the antenna 110 are implemented in a handset (e.g., smart phone) in which the distance between the antenna 110 and the subject 104 is much smaller.

It will be appreciated that one or more aspects of the disclosure may be implemented using hardware, software, or a combination thereof. FIG. 8 depicts a high-level block diagram of an example computing apparatus 800 suitable for implementing one or more aspects of the disclosure. Apparatus 700 comprises a processor 802 that is communicatively interconnected with various input/output devices 804 and a memory 806.

The processor 802 may be any type of processor such as a general purpose central processing unit ("CPU") or a dedicated microprocessor such as an embedded microcontroller or a digital signal processor ("DSP"). The input/output devices 804 may be any peripheral device operating under the control of the processor 802 and configured to input data into or output data from the apparatus 800, such as, for example, transmitter 106, receiver 108, and antenna 110. The input/output devices 804 may also include network adapters, data ports, and various user interface devices such as a keyboard, a keypad, a mouse, or a display.

Memory 806 may be any type of memory suitable for storing electronic information, including data and instructions executable by the processor 802. Memory 806 may be implemented as, for example, as one or more combinations of a random access memory (RAM), read only memory (ROM), flash memory, hard disk drive memory, compact-disk memory, optical memory, etc. In addition, apparatus 800 may also include an operating system, queue managers, device drivers, or one or more network protocols which may be stored, in one embodiment, in memory 806 and executed by the processor 802.

The memory 806 may include non-transitory memory storing executable instructions and data, which instructions, upon execution by the processor 802, may configure apparatus 800 to perform the functionality in accordance with the various aspects and steps described above. In one or more embodiments, the processor 802 may be configured, upon execution of the instructions, to communicate with, control, or implement the all or a part of the functionality of the speech recognition unit 112 (e.g., the preprocessing unit 202, the NNet unit 204, and the HMM unit 206) of the lip-reading system 102. In one or more embodiments, the processor 802 may also be configured to communicate with and/or control other apparatus 800 to which it is interconnected via, for example a network, and which other apparatus may be configured to perform part or all of the functionality of the lip-reading system 102 under such control. In one or more embodiments, the processor 802 may also be configured as a plurality of interconnected processors that are situated in different locations and interconnected with each other.

While a particular apparatus configuration is shown in FIG. 8, it will be appreciated that the present disclosure not limited to any particular implementation. For example, in other embodiments, the various functionality disclosed herein, such as the functionality of the preprocessing unit 202, the NNet unit 204, or the HMM unit 206 may implemented using one or more application specific integrated circuits (ASICs), field programmable gate arrays (FPGAs), or any other combination of suitable hardware or circuits.

The systems and methods disclosed herein are believed to incur a number of advantages. The present disclosure enhances and supports speech recognition in a number of different languages using contactless lip-reading systems and methods. Lip-reading may improve the performance of speech recognition and efficiency of the system, while conventional (microphone based) speech recognition systems may also be supported and integrated. Performance enhancements may be achieved under adverse conditions like environmental noise and acoustical distortions, and persons with speaking/hearing impairments may be better able to communicate and use modern communication techniques like internet and telecommunications.

Although aspects herein have been described with reference to particular embodiments, it is to be understood that these embodiments are merely illustrative of the principals and applications of the present disclosure. It is therefore to be understood that numerous modifications can be made to the illustrative embodiments and that other arrangements can be devised without departing from the spirit and scope of the disclosure.

## Claims

1. A lip-reading speech processing system comprising:

   a preprocessing unit configured to receive a reflected electromagnetic signal that has been modulated by lip and facial movements of a speaking subject, the preprocessing unit being further configured to preprocess the reflected electromagnetic signal to determine a set of principal components;
   a neural network unit configured to receive the set of the principal components and to classify the set of the principal components into a classified set of phonemes in a language; and,
   a Hidden Markov Model unit configured to receive the classified set of phonemes in the language and to process the classified set of phonemes in the language into a concatenated sequence representing a recognized word of the language.

2. The lip-reading speech processing system of claim 1, wherein the reflected electromagnetic signal is a millimeter radar signal having a carrier frequency of greater than or equal to 5 GHz.

3. The lip-reading speech processing system of claim 1, wherein the reflected electromagnetic signal is a pulsed electromagnetic signal having a pulse frequency of about 8 KHz.

4. The lip-reading speech processing system of claim 1 wherein the neural network unit is implemented with a plurality of levels, where each of the levels of the neural network unit includes a plurality of nodes, and each of the nodes of a given level is interconnected to each of the nodes of another level by a different synaptic connection.

5. The lip-reading speech processing system of claim 4 wherein the neural network unit is trained to classify the set of the principal components into the classified set of the phonemes in the language by adjusting a weight associated with one or more of the different synaptic connections.

6. The lip-reading speech processing system of claim 4, wherein the plurality of levels include a input level having a number of nodes that correspond to a number of principal components in the set of principal components, and a output level having a number of nodes that correspond to a number of phonemes in the language.

7. The lip-reading speech processing system of claim 5, wherein the plurality of levels include at least one hidden level.

8. The lip-reading speech processing system of claim 1, wherein the preprocessing unit is further configured to:

   demodulate the reflected electromagnetic signal into a windowed time-spectrum signal by removing a carrier of an un-modulated emitted electromagnetic signal from the reflected electromagnetic signal.

9. The lip-reading speech processing system of claim 8, wherein the preprocessing unit is further configured to:

   determine a frequency transform of the windowed time-spectrum signal;
   determine a power spectrum of the frequency transform of the windowed time-spectrum signal;

determine a set of cepstral coefficients for the windowed time-spectrum signal by computing an inverse frequency transform of the power spectrum; and,

determine the set of principal components from the determined set of cepstral coefficients.

10. The lip-reading speech processing system of claim 9, wherein the preprocessing unit is further configured to determine the set of principal components from the determined set of cepstral coefficients based on the order of highest variance of the cepstral coefficients.

11. The lip-reading speech processing system of claim 10, wherein the number of principal components in the set of principal components is smaller than the number of cepstral components in the determined set of cepstral coefficients.

12. The lip-reading speech processing system of claim 9, wherein the preprocessor is further configured to determine the set of principal components from the determined set of cepstral coefficients by computing a discrete Karhunen-Loève transform, a Hotelling transform, or a proper orthogonal decomposition transform.

13. The lip-reading speech processing system of claim 1, wherein the system further comprises a plurality of selectable parameter sets for dynamically training the neural network unit for classifying the set of principal components based on different languages, dialects, or changes in the prevalent external conditions.

14. The lip-reading speech processing system of claim 1, the system further comprising:

at least one additional neural network unit configured to receive the set of the principal components and to classify the set of the principal components into a respective classified set of phonemes of at least one additional language; and,

at least one additional Hidden Markov Model unit configured to receive the respective classified set of phonemes of the at least one additional language from the at least one additional neural network unit and to process the respective classified set of phonemes in the at least one additional language into at least one additional concatenated sequence representing a recognized word of the at least one additional language.

15. The lip-reading speech processing system of claim 1, wherein the lip-reading speech processing system is implemented in at least one of a television, a PC monitor, a multimedia tablet, a set-top box, a projector, a conferencing device, a smart phone, a security device, a server, or a personal computer.

104

112

102

108 106

110

FIG. 1

Speech Recognition Unit 112

Preprocessing

n

Neural Network

m

Hidden Markov Model (HMM) based recognition

speech output

202

204

206

FIG. 2

FIG. 3

FIG. 4

FIG. 5

600

```
┌─────────────────┐
│     START       │── 602
└─────────────────┘
         │
┌─────────────────────────────────┐
│ RECEIVE A DOPPLER BROADENED      │
│ REFLECTED SIGNAL THAT HAS BEEN   │── 604
│ MODULATED AND REFLECTED BY THE   │
│ LIP AND FACIAL MOVEMENTS OF THE  │
│ SPEAKING SUBJECT                 │
└─────────────────────────────────┘
         │
┌─────────────────────────────────┐
│ PREPROCESS THE DOPPLER BROADENED │
│ REFLECTED SIGNAL TO EXTRACT ONE  │── 606
│ OR MORE FEATURES (A SET OF n     │
│ PRINCIPAL COMPONENTS)            │
└─────────────────────────────────┘
         │
┌─────────────────────────────────┐
│ CLASSIFY THE SET OF N PRINCIPAL  │
│ COMPONENTS INTO M OUTPUTS, WHERE │
│ EACH OF THE OUTPUTS REPRESENT A  │── 608
│ PROBABILITY ASSOCIATED WITH THE  │
│ M VOCAL AND CONSONANTAL PHONEMES │
│ IN A LANGUAGE                    │
└─────────────────────────────────┘
         │
┌─────────────────────────────────┐
│ SELECTIVELY CONCATENAT THE       │
│ CLASSIFIED SET OF M VOCAL AND    │── 610
│ CONSONANTAL PHONEMES INTO A      │
│ RECOGNIZED WORD OF A LANGUAGE    │
└─────────────────────────────────┘
         │
┌─────────────────┐
│      END        │── 612
└─────────────────┘
```

FIG. 6

FIG. 7

FIG. 8

Europäisches
Patentamt

European
Patent Office

Office européen
des brevets

## EUROPEAN SEARCH REPORT

Application Number

EP 13 29 0332

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | MINGKE JIAO ET AL: "A new speech enhancement algorithm for millimeter-wave radar speech sensor", MICROWAVE AND OPTICAL TECHNOLOGY LETTERS, vol. 56, no. 5, 11 March 2014 (2014-03-11), pages 1184-1189, XP055124749, ISSN: 0895-2477, DOI: 10.1002/mop.28294 * page 1184, right-hand column, last paragraph - page 1185, left-hand column, paragraph 1 * * page 1188, right-hand column, paragraph 3 * | 1-15 | INV. G06K9/00 G10L15/25 |
| T | YING TIAN ET AL: "Smart radar sensor for speech detection and enhancement", SENSORS AND ACTUATORS A: PHYSICAL, vol. 191, 1 March 2013 (2013-03-01), pages 99-104, XP055124819, ISSN: 0924-4247, DOI: 10.1016/j.sna.2012.12.002 * page 100, left-hand column, paragraph 2 - paragraph 3 * * page 103, left-hand column, last paragraph * | 1-15 |  |
| T | ROBERT D PREUSS ET AL: "Noise Robust Vocoding at 2400 bps", SIGNAL PROCESSING, THE 8TH INTERNATIONAL CONFERENCE ON, IEEE, PI, 1 January 2006 (2006-01-01), XP031058580, ISBN: 978-0-7803-9736-1 * page 2, left-hand column, paragraph 2 * | 1-15 |  |

TECHNICAL FIELDS
SEARCHED (IPC)

G06K
G10L

-/--

The present search report has been drawn up for all claims

| Place of search | Date of completion of the search | Examiner |
|---|---|---|
| The Hague | 24 June 2014 | Granger, Bruno |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
   document

EPO FORM 1503 03.82 (P04C01)

**EP 2 889 804 A1**

Europäisches
Patentamt

European
Patent Office

Office européen
des brevets

**EUROPEAN SEARCH REPORT**

Application Number

EP 13 29 0332

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/059657 A1 (WILLEY JEFFERSON M [US] ET AL) 8 March 2012 (2012-03-08)<br>* abstract *<br>* paragraph [0032] *<br>* paragraph [0040] - paragraph [0042] *<br>* paragraph [0077] - paragraph [0079] *<br>* paragraph [0085]; figure 1 * | 1-15 | |
| T | John Holmes et al.: "Speech synthesis and recognition",<br>1 January 2001 (2001-01-01), Taylor Francis, XP002726187,<br>page 167, 228,<br>* Section "10.9 General Features Transformations";<br>paragraph [0003] *<br>* Section "10.8 Capturing the Perceptually Relevant Information";<br>page 167, paragraph 1 - paragraph 2 *<br>* page 228, paragraph 2 * | 1 | |
| T | S. Katagiri: "Handbook of Neural Networks for Speech Processing",<br>1 January 2000 (2000-01-01), ARTECH HOUSE, XP008170035,<br>ISBN: 0-89006-954-9<br>pages 281-306,<br>* page 295, last paragraph * | 1 | TECHNICAL FIELDS SEARCHED (IPC) |
| X | US 5 729 694 A (HOLZRICHTER JOHN F [US] ET AL) 17 March 1998 (1998-03-17)<br>* abstract *<br>* column 6, line 16 - line 55 *<br>* column 15, line 4 - line 6 *<br>* column 15, line 21 - column 25 *<br>* column 40, line 9 - line 30 *<br>* column 40, line 59 - column 42, line 12 *<br>* column 48, line 9 - column 50, line 47 * | 1-15 | |

The present search report has been drawn up for all claims

| Place of search | Date of completion of the search | Examiner |
|---|---|---|
| The Hague | 24 June 2014 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

**ANNEX TO THE EUROPEAN SEARCH REPORT
ON EUROPEAN PATENT APPLICATION NO.**

EP 13 29 0332

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2014

| Patent document cited in search report | | Publication date | Patent family member(s) | | Publication date |
|---|---|---|---|---|---|
| US 2012059657 | A1 | 08-03-2012 | NONE | | |
| US 5729694 | A | 17-03-1998 | EP | 0880772 A1 | 02-12-1998 |
| | | | JP | 2000504849 A | 18-04-2000 |
| | | | US | 5729694 A | 17-03-1998 |
| | | | WO | 9729482 A1 | 14-08-1997 |

EPO FORM P0459

For more details about this annex : see Official Journal of the European Patent Office, No. 12/82